# EUROPÄISCHE PATENTSCHRIFT

(11) **EP 2 841 789 B1**
(45) Veröffentlichungstag und Bekanntmachung des Hinweises auf die Patenterteilung: **28.12.2016**
(21) Anmeldenummer: 13718789.4
(22) Anmeldetag: 26.04.2013
(51) Int. Cl.: F16D 66/02, F16D 65/097

(54) **BEFESTIGUNG EINES KONTAKTLEITERS EINER VORRICHTUNG ZUR ÜBERWACHUNG EINES BREMSBELAGVERSCHLEISSES**
MEANS FOR MOUNTING A CONTACT LINE OF A DEVICE FOR MONITORING BRAKE LINING WEAR
FIXATION D'UN CONDUCTEUR DE CONTACT D'UN DISPOSITIF DESTINÉ À SURVEILLER L'USURE D'UNE GARNITURE DE FREIN

(30) Priorität: 27.04.2012 DE 102012008572
(43) Veröffentlichungstag der Anmeldung: 04.03.2015
(73) Patentinhaber: KNORR-BREMSE Systeme für Nutzfahrzeuge GmbH, 80809 München (DE)
(72) Erfinder: ASEN, Alexander, 94428 Eichendorf (DE)
(86) Internationale Anmeldenummer: PCT/EP2013/001266
(87) Internationale Veröffentlichungsnummer: WO 2013/159938

(56) Entgegenhaltungen:
- EP-A1- 2 112 397
- DE-A1-102005 060 551
- US-A- 5 513 726
- US-A1- 2008 110 707

## Beschreibung

Die Erfindung betrifft die Befestigung eines Kontaktleiters einer Vorrichtung zur Überwachung eines Bremsbelagverschleißes nach dem Oberbegriff des Anspruchs 1. Eine solche Befestigung ist aus der WO 2008/060392 A1 bzw. aus der DE 10 2005 060 551 A1 bekannt.

Dabei sind zur Überwachung der Reibbelagdicke, insbesondere zur Feststellung einer zulässigen Verschleißgrenze des Reibbelages eines Bremsbelages Kontaktleiter in Form von Kabeln vorgesehen, die bereichsweise in den Reibbelag eingebettet sind und bei Erreichen einer Verschleißgrenze von einer mit dem Reibbelag bei einer Bremsung in Kontakt stehenden Bremsscheibe angeschliffen werden, wodurch ein elektrischer Impuls an einen Signalgeber abgegeben wird. Dieser zeigt an, dass ein Auswechseln des Bremsbelages erforderlich ist.

Einerseits zum Schutz und andererseits zur Verhinderung unkontrollierter Bewegungen, insbesondere bei fahrbedingten Erschütterungen, ist der Kontaktleiter am Bremssattel befestigt und zwar in einer Kabelführung, die auf einem eine Montageöffnung des Bremssattels überspannenden Haltebügel aufliegt und die von einer Abdeckung, üblicherweise aus Blech, überdeckt ist. Zur festen Positionierung des Kontaktleiters sind an der separaten Kabelführung Klemmlaschen vorgesehen, mit denen der Kontaktleiter form- und/oder reibschlüssig gehalten wird.

Diese, in der Regel aus Kunststoff bestehende Kabelführung greift formschlüssig in den Haltebügel ein, wobei bei einer Montage des Kontaktleiters zunächst angeschlossene Verschleißkontakte in eine Belagträgerplatte eingesetzt werden, dann die Kabelführung am Haltebügel befestigt wird, bevor der Kontaktleiter in der Kabelführung festgeklemmt und das Abdeckblech unter Abdeckung des Kontaktleiters und der Kabelführung aufgesetzt wird.

Allerdings ergeben sich vor allem dadurch Probleme, dass bei einer Montage bzw. Demontage eines der Scheibenbremse zugeordneten Rades die Radfelge am Abdeckblech aufschlagen kann, was in der Praxis häufig vorkommt und daher insofern zu beklagen ist, als dabei der Kontaktleiter gequetscht und vielfach beschädigt wird bis hin zum Funktionsausfall. Selbst bei sorgfältiger Handhabung lässt sich diese Gefahr nicht gänzlich ausschließen. Der Ausfall der Funktionsfähigkeit des Kontaktleiters führt letztendlich zur Notwendigkeit eines Austauschs, was naturgemäß mit einem erheblichen Aufwand, insbesondere bezüglich entstehender Kosten verbunden ist.

Die DE 10 2008 021 008 A1 offenbart eine Befestigung eines Kontaktleiters, bei der keine separate Kabelführung vorgesehen ist, sondern die Kontaktleiter durch angeformte und umgebogene Laschen an einer Abdeckung gehalten sind, die formschlüssig mit einem Haltebügel verbunden ist.

Der Erfindung liegt die Aufgabe zugrunde, eine Befestigung der gattungsgemäßen Art so weiterzuentwickeln, dass ihre Funktionsfähigkeit verbessert und ihre Standzeit erhöht wird.

Diese Aufgabe wird durch eine Befestigung mit den Merkmalen des Anspruchs 1 gelöst.

Durch das Distanzelement ist ein in seiner Höhe definierter Zwischenraum geschaffen zwischen der Abdeckung und der Kabelführung, durch den gewährleistet ist, dass auch bei einer Belastung der Abdeckung durch Aufprall oder Aufliegen eines Fremdkörpers, beispielsweise der genannten Radfelge, der dazwischen liegende Kontaktleiter nicht im Sinne einer Quetschung beaufschlagt wird.

Das Distanzelement, vorzugsweise sind zwei abständig zueinander angeordnete Distanzelemente vorgesehen, übernimmt somit die Funktion eines Widerlagers, das die einwirkenden Kräfte ableitet.

Nach einer vorteilhaften Weiterbildung der Erfindung sind die Distanzelemente an die Kabelführung angeformt, die, wie bereits erwähnt, üblicherweise als Spritzgussteil ausgebildet ist. D.h., die Erfindung lässt sich weitgehend kostenneutral realisieren.

Dies ergibt sich gleichermaßen, wenn alternativ oder ergänzend die Distanzelemente an der Abdeckung vorgesehen sind, die als Blechstanzteil ausgebildet ist mit den durch Stanzen oder Prägen eingebrachten Distanzelementen.

Durch die Erfindung ergeben sich nun eine ganze Reihe von Vorteilen gegenüber einer bekannten Befestigung. Da eine Beschädigung des Kontaktleiters innerhalb der Befestigung quasi ausgeschlossen ist, auch bei ungünstigsten Verhältnissen, erhöht sich natürlich die Standzeit der Befestigung auch des Kontaktleiters, die nun ausschließlich bestimmt wird von der eigentlichen Funktion, nämlich einer Verschleißsensierung des Reibbelages.

In der Folge ergibt sich eine durchaus bemerkenswerte Kostenersparnis, da eine vorzeitige Auswechselung der Befestigung einschließlich des Kontaktleiters nicht mehr erforderlich ist, was bislang, wie geschildert, nur mit erheblichem Montageaufwand möglich ist, einschließlich eines gegebenenfalls notwendigen Ausbaus der Scheibenbremse insgesamt.

Nach einer vorteilhaften Weiterbildung der Erfindung ist vorgesehen, die Kabelführung mit zusätzlichen Kontaktleiteraufnahmen auszustatten, die eine genau definierte Führung des Kontaktleiters sicherstellen.

Hierzu können beispielsweise zwei Kontaktleiter-Führungen vorgesehen sein, die unmittelbar nebeneinander liegen und die die Bildung eines Doppelschleifen-Verlaufs des Kontaktleiters ermöglichen, wodurch ein fester Halt des Kontaktleiters erreicht wird.

Nach einem weiteren Gedanken der Erfindung ist vorgesehen, die Distanzelemente klotzartig auszubilden, so dass eine ausreichend große Auflagefläche für die Abdeckung bereitgestellt wird, wobei die Abdeckung in an sich bekannter Weise mit dem Haltebügel verrastet ist, so dass die Abdeckung quasi eine Doppelfunktion übernimmt und zwar zum einen den Schutz des Kontaktleiters und zum anderen die Arretierung der Kabelführung am Haltebügel.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine Einzelheit einer Befestigung nach der Erfindung in einer perspektivischen Ansicht
- Figur 2: ein weiteres Ausführungsbeispiel der Erfindung in teilweise montierter Stellung, gleichfalls perspektivisch gezeigt
- Figur 3: eine komplettierte Befestigung, ebenfalls in schaubildlicher Darstellung.

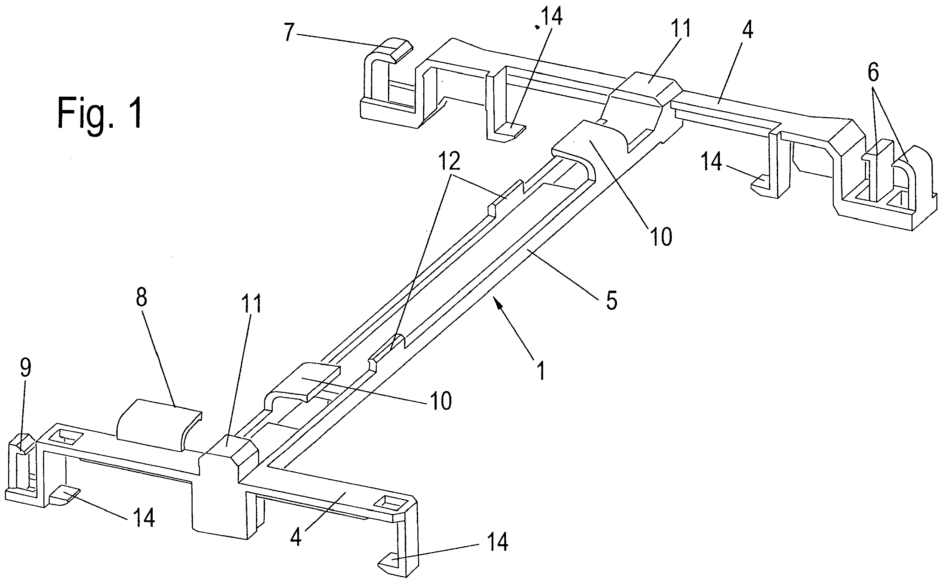

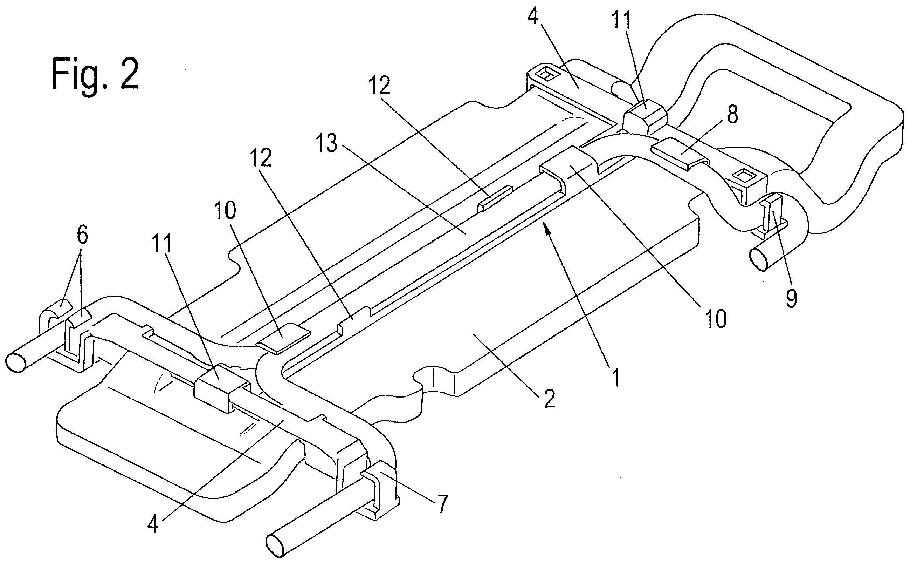

In der Figur 1 ist eine Kabelführung 1 einer Befestigung eines Kontaktleiters 13 (Figur 2) gezeigt, die Bestandteile einer Vorrichtung zur Überwachung eines Bremsbelagverschleißes einer Scheibenbremse, insbesondere eines Nutzfahrzeuges, an einem nicht gezeigten Bremssattel sind.

Dabei ist der Kontaktleiter 13 in der in der Figur 1 als Einzelheit gezeigten Kabelführung 1 gehalten, entsprechend der Darstellung in der Figur 2.

Diese zeigt weiter die Anordnung der Kabelführung 1 an einem Haltebügel 2, der eine Montageöffnung des Bremssattels überspannt und an dem die Kabelführung 1 anliegt.

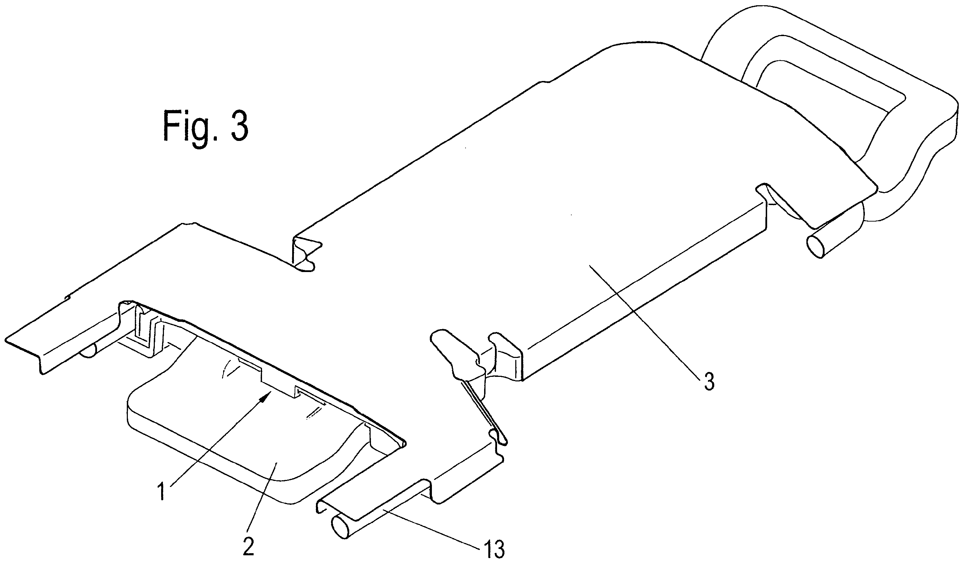

In der Figur 3 schließlich ist die komplettierte Befestigung gezeigt, wobei die Kabelführung 1 mit installiertem Kontaktleiter 13 von einer Abdeckung 3 überdeckt ist, die mit dem Haltebügel 2 verrastet ist.

Die in der Figur 1 als Einzelheit gezeigte Kabelführung 1 ist in der Figur 2 in der Ebene um 180° gedreht dargestellt an dem Haltebügel 2 befestigt, während die Figur 3 quasi die Endstellung der Befestigung wiedergibt, in der die Abdeckung 3 mit dem Haltebügel 2 und/oder der Kabelführung 1 verrastet ist.

Die Kabelführung 1 weist, gemäß der Erfindung, Distanzelemente 11 auf, die an die aus Kunststoff bestehende Kabelführung 1 angeformt sind und die in dem den Kontaktleiter 13 aufnehmenden Zwischenraum zwischen der Abdeckung 3 und der Kabelführung 1 angeordnet sind und an denen die Abdeckung 3 anliegt.

Dabei ist die Höhe der Distanzelemente 11 größer als der Durchmesser des Kontaktleiters 13.

Die Kabelführung 1 ist als Doppel-T geformt mit zwei abständig zueinander angeordneten Schenkeln 4 und einer diese verbindenden Strebe 5.

Einer der Schenkel 4, und zwar in der Figur 1 der obere, weist endseitig Klammern 6, 7 auf, in denen der geführte Kontaktleiter 13 gehalten ist.

Die rechte Klammer 6 ist als Doppelklammer ausgebildet, so dass der geführte Kontaktleiter 13 in zwei Schleifen eingelegt werden kann.

Der gegenüberliegende Schenkel 4 ist ebenfalls mit Klammern 9 versehen, zur Aufnahme des Kontaktleiters 13, der im Übrigen durch Klammern 10 an der Strebe 5 geführt und befestigt ist, während Anschläge 12, die seitlich versetzt angeformt sind, eine Kontaktleiterführung bilden.

Im Übrigen ist am unteren Schenkel 4 eine zusätzliche Kontaktleiter-Klammer 8 vorgesehen, mittels der der Kontaktleiter 13 auch an dieser Stelle sicher gehalten wird.

Mittels Lagerhaken 14, die an beiden Schenkeln 4 angeformt sind, ist die Kabelführung 1 an dem Haltebügel 2 befestigt, wobei diese Lagerhaken 14 den Haltebügel 2 untergreifen.

## Patentansprüche

1. Befestigung eines Kontaktleiters (13) einer Vorrichtung zur Überwachung eines Bremsbelagverschleißes einer Scheibenbremse, insbesondere eines Nutzfahrzeuges, an einem Bremssattel, wobei der Kontaktleiter (13) in einer separaten Kabelführung (1) gehalten ist, die an einem eine Montageöffnung des Bremssattels überspannenden Haltebügel (2) anliegt und von einer Abdeckung (3) überdeckt ist, **dadurch gekennzeichnet, dass** die Kabelführung (1) und/oder die Abdeckung (3) zumindest ein in dem den Kontaktleiter (13) aufnehmenden Zwischenraum angeordnetes und diesen in der Höhe begrenzendes, ein Widerlager bildendes Distanzelement (11) aufweist.

2. Befestigung nach Anspruch 1, **dadurch gekennzeichnet, dass** das Distanzelement (11) an die Kabelführung (1) oder die Abdeckung (3) angeformt ist.

3. Befestigung nach Anspruch 1 oder 2, **dadurch gekennzeichnet, dass** bei Anordnung der Distanzelemente (11) an die Kabelführung die Distanzelemente (11) an zwei parallel und abständig zueinander angeordneten Schenkeln (4) positioniert sind.

4. Befestigung nach einem der vorhergehenden Ansprüche, **dadurch gekennzeichnet, dass** jedes Distanzelement (11) in seiner Höhe größer bemessen ist als der Durchmesser des Kontaktleiters (13).

5. Befestigung nach einem der vorhergehenden Ansprüche, **dadurch gekennzeichnet, dass** der Kontaktleiter (13) an angeformten Klammern (6, 7, 8, 9, 10) gehalten ist.

6. Befestigung nach einem der vorhergehenden Ansprüche, **dadurch gekennzeichnet, dass** zumindest eine Klammer (8) an einem der Schenkel (4) angeformt ist.

7. Befestigung nach einem der vorhergehenden Ansprüche, **dadurch gekennzeichnet, dass** an zumindest einer Seite eines Schenkels (4) endseitig eine Doppelklammer (6) vorgesehen ist.

8. Befestigung nach einem der vorhergehenden Ansprüche, **dadurch gekennzeichnet, dass** bei Ausbildung der Distanzelemente (11) an der aus Blech bestehenden Abdeckung (3) die Distanzelemente (11) durch Stanzen oder Prägen hergestellt sind.

## Claims

1. Means for fastening a contact conductor (13) of a device for monitoring brake lining wear of a disc brake, in particular of a commercial vehicle, on a brake calliper, the contact conductor (13) being held in a separate cable guide (1), which bears against a retaining bracket (2) extending over an assembly opening of the brake calliper, and being covered by a cover (3), **characterised in that** the cable guide (1) and / or the cover (3) have / has at least one spacer element (11), which forms an abutment, is arranged in the intermediate space which receives the contact conductor (13) and delimits the height of the intermediate space.

2. Means for fastening according to claim 1, **characterised in that** the spacer element (11) is formed integrally onto the cable guide (1) or the cover (3).

3. Means for fastening according to claim 1 or 2, **characterised in that**, if the spacer elements (11) are arranged on the cable guide, the spacer elements (11) are positioned on two legs (4) which are arranged in parallel and spaced apart from one another.

4. Means for fastening according to one of the preceding claims, **characterised in that** the height of each spacer element (11) is greater than the diameter of the contact conductor (13).

5. Means for fastening according to one of the preceding claims, **characterised in that** the contact conductor (13) is held on integrally formed clips (6, 7, 8, 9, 10).

6. Means for fastening according to one of the preceding claims, **characterised in that** at least one clip (8) is formed integrally on one of the legs (4).

7. Means for fastening according to one of the preceding claims, **characterised in that** a double clip (6) is provided on at least one side of a leg (4) at the end face.

8. Means for fastening according to one of the preceding claims, **characterised in that**, if the spacer elements (11) are formed on the cover (3) made of sheet metal, the spacer elements (11) are produced by way of punching or stamping.

## Revendications

1. Fixation d'un conducteur de contact (13) d'un dispositif à surveiller l'usure d'une garniture de frein d'un frein à disque, en particulier d'un véhicule utilitaire, à un étrier de frein, dans lequel ledit conducteur de contact (13) est retenu dans un guide de câblage (1) séparé, qui porte contre un étrier de retenu (2) recouvrant une ouverture de montage dudit étrier de frein et qui est recouvré par une couverture (3), **caractérisée en ce que** ledit guide de câblage (1) et/ou ladite couverture (3) comprend au moins un élément écarteur (11) disposé dans l'espace recevant ledit guide de câblage, en limitant l'hauteur dudit espace et constituant une butée.

2. Fixation selon la revendication 1, **caractérisée en ce que** ledit élément écarteur (11) est formé sur ledit guide de câblage (1) ou ladite couverture (3).

3. Fixation selon la revendication 1 ou 2, **caractérisée en ce que** quand lesdits éléments écarteurs (11) sont disposés audit guide de câblage, lesdits éléments écarteurs (11) sont positionnés à deux bras (4) parallèles, qui sont arrangés à un écart l'un de l'autre.

4. Fixation selon une quelconque des revendications précédentes, **caractérisée en ce que** chaque élément écarteur (11) est dimensionné en une hauteur plus grande que le diamètre dudit conducteur de contact (13).,

5. Fixation selon une quelconque des revendications précédentes, **caractérisée en ce que** ledit conducteur de contact (13) est retenu aux attaches (6, 7, 8, 9, 10) y formées.

6. Fixation selon une quelconque des revendications précédentes, **caractérisée en ce qu'**au moins une attache (8) est formée à un desdits bras (4).

7. Fixation selon une quelconque des revendications précédentes, **caractérisée en ce qu'**une attache double (6) est disposée à au moins un côté d'un bras (4) du côté terminal.

8. Fixation selon une quelconque des revendications précédentes, **caractérisée en ce qu'**au cas de la formation desdits éléments écarteurs (11) à ladite couverture (3), qui consiste en tôle, lesdits éléments écarteurs (11) sont faits par emboutissage ou estampage.
